# EUROPÄISCHE PATENTSCHRIFT

(11) **EP 1 222 148 B1**
(45) Veröffentlichungstag und Bekanntmachung des Hinweises auf die Patenterteilung: **15.01.2003**
(21) Anmeldenummer: 00983044.9
(22) Anmeldetag: 20.10.2000
(51) Int. Cl.: C04B 18/02

(54) **FARBPIGMENTGRANALIEN UND VERFAHREN ZUR HERSTELLUNG**
COLORING PIGMENT GRANULATES AND METHOD FOR PRODUCING THE SAME
PIGMENTS COLORES SOUS FORME GRANULAIRE ET PROCEDE PERMETTANT DE LES PRODUIRE

(30) Priorität: 21.10.1999 DE 19950712
(43) Veröffentlichungstag der Anmeldung: 17.07.2002
(73) Patentinhaber: Rhein-Chemotechnik GmbH Gesellschaft für chemische und technische Erzeugnisse, 53547 Breitscheid (DE)
(72) Erfinder: NOACK, Bernd, 07318 Saalfeld (DE); HERRMANN, Bernd, 07907 Schleiz (DE)
(74) Vertreter: Liedtke, Klaus, Dr.
(86) Internationale Anmeldenummer: DE0003690
(87) Internationale Veröffentlichungsnummer: WO01028954

(56) Entgegenhaltungen:
- DE-A- 19 731 698
- US-A- 5 002 609
- US-A- 5 215 583
- US-A- 5 797 988

## Beschreibung

Die Erfindung betrifft Farbpigmentgranalien für das Einfärben von Baustoffen, insbesondere zum Einfärben von Beton, sowie ein Verfahren zur Herstellung von Farbpigmentgranalien.

Üblicherweise werden Farbpulver für Betonfarben zur Erzielung einer guten Dosier- und Transportfähigkeit sowie zur Reduzierung der Staubentwicklung granuliert. Im Stand der Technik sind verschiedene Granalien zum Einfärben von Beton bekannt, wobei die Granalien zur Erzielung einer ausreichenden Granalienfestigkeit aus einem weitgehend homogenen Gemisch aus Farbpulver und einem Bindemittel hergestellt werden. Nachteilig bei diesen bekannten Granalien ist die aufgrund weitgehend homogener Bindemittelverteilung geringe Auflösegeschwindigkeit. Bisher konnte eine Erhöhung der Auflösegeschwindigkeit zum Beispiel durch eine Reduzierung der Granaliengröße erzielt werden, was jedoch zu einer erhöhten Staubentwicklung beim Transport und bei der Verarbeitung führt. Außerdem ist der Zusatz von Dispergier- und Netzmitteln zu den Granalien erforderlich.

In DE 196 38 042 A1 ist ein Verfahren zur Herstellung von anorganischen Pressoder Brikettiergranulaten aus anorganischen Pigmenten mit Hilfsmitteln beschrieben, bei dem ein oder mehrere Pigmente mit einem oder mehreren die Verarbeitbarkeit fördernden Hilfsmitteln vermischt werden, diese Mischung einem Pressoder Brikettierschritt unterworfen wird, dieses gepresste oder brikettierte Produkt zerkleinert wird, das zerkleinerte Produkt in zwei oder mehrere Fraktionen aufgetrennt wird, die Fraktion, in der mindestens 85% der Teilchen größer 80 µm, bevorzugt größer 100 µm, sind oder zwischen 80 und 2000 µm, bevorzugt zwischen 100 und 1000 µm, liegen, als Produkt entnommen wird und gegebenenfalls in einem weiteren Schritt gerundet wird, die andere Fraktion bzw. Fraktionen aus dem Prozess ausgeschleust oder zurückgeführt werden.

Nach EP 0 191 278 ist eine Farbpräparation für die Färbung von Baustoffen mit anorganischen Metalloxiden bekannt, die aus einem schüttfähigen Feuchtgranulat besteht. Dort ist auch vorgesehen, auf das Granulat ein als Trennmittel dienendes Pulver aufzustreuen, damit das Granulat auch in Großbehältern schüttfähig bleibt und das Granulat nur zum Teil getrocknet werden muss.
Nachteilig ist dabei, dass bei diesem Feuchtgranulat-Trennmittel-Gemisch keine gleichmäßige Verteilung des Trennmittels gewährleistet ist und dass aufgrund der Granalienform die Fließfähigkeit eingeschränkt ist.

Ferner sind nach DE 39 18 694 C 1 und nach DE 41 03 531 A 1 Verfahren bekannt, Sprühgranulate mit zuvor eingemischten anorganischen Bindemitteln herzustellen. Dabei ist es nach DE 41 03 531 A1 möglich, Feinteilchen durch eine zusätzliche Aufbaugranulierung an die Kerne zu binden. Als nachteilig wirken sich bei beiden Verfahren der hohe Verbrauch an Trocknungsenergie aus.

Bei dem in DE 39 18 694 C1 beschriebenen Verfahren wird eine in Tropfenform versprühte Pigmentsuspension im heißen Gasstrom zu Pigmentmikrogranulaten getrocknet. Das Zerstäuben der Suspension erfolgt über Zentrifugalzerstäuber, Druckdüse oder Zweistoffdüse. Die Stabilität der Granalien wird durch zuvor in die wässrige Pigmentoxidsuspension eingemischten anorganischen Bindemitteln erreicht. Nachteilig ist hierbei der hohe Staubanteil und das schlechte Fließverhalten.

Ungünstig ist außerdem, dass die Pigmentoxide der Granalien mit anorganischen Bindemitteln durchmischt sind, wodurch die Transport- und Lagerstabilität gewährleistet werden soll.

Bei dem in DE 41 035 31 A1 vorgeschlagenen Verfahren ist zwar während einer Nachgranulierung auch das Besprühen mit wässrigen Lösungen von anorganischen Bindemitteln vorgesehen, jedoch entspricht dies eher einem Anbinden von Feinteilen an die Granulatkerne und somit einem Aufgranulieren der Staubpartikel des Gemischs. Am Granulatkern kann damit auch eine abriebgefährdete Außenschale von Partikeln und Bindemitteln entstehen.

Nach einem in DE 197 31 698 A1 beschriebenen Verfahren werden im wesentlichen Pressgranulate mit Linienkräften > 15 kN/cm hergestellt, die in der Regel zerkleinert und gegebenenfalls gerundet werden. Hier wird ebenfalls wie in DE 196 38 042 A1 das Pigmentpulver mit Bindemitteln gemischt. Zur späteren Auflösung der Haftkräfte werden Netz- und/oder Sprengmitteln in das Gemisch mit eingebracht. Hierbei sind schädliche Wirkungen solcher Substanzen auf die Eigenschaften der eingefärbten Baustoffe nicht auszuschließen.

Ferner ist es aus US-A-5 002 609 bekannt, Pigmentgranulate zum Einfärben von Beton zu verwenden, die durch Sprühtrocknung von Pigmentsuspensionen und auschließendes Erhitzen des Granulats auf Temperaturen von 400-800°C hergestellt werden. Der Zusammenhalt der Pigmentteilchen innerhalb des Granulats erfolgt durch Zusammenbacken beim Erhitzen. Die Anwesenheit eines Bindemittels scheint nicht erforderlich zu sein.

Der Erfindung liegt die Aufgabe zugrunde, ein Granulat sowie ein Verfahren zur wirtschaftlichen Herstellung dieses Granulates anzugeben, welches sich nach seiner Zugabe in einen zu färbenden Baustoff mit hoher Geschwindigkeit aufzuschließen vermag.

Erfindungsgemäß wird die Aufgabe mit den kennzeichnenden Merkmalen der Ansprüche 1 und 4 gelöst.

Vorteilhafte Ausgestaltungen sind in den Unteransprüchen angegeben.

Die Erfindung weist eine Reihe von Vorteilen auf.

Die Granalien sind aus einem Kem ohne Bindemittel und aus einer Hülle aufgebaut. Die Hülle passt sich der Oberfläche der Granalie an, umschließt diese vollständig und bewirkt die mechanische Festigkeit. Dabei wird auf das Durchmischen des Pigmentoxidpulvers mit Bindemitteln, Emulgatoren, Netzmitteln, Dispergiermitteln und Konservierungsstoffen verzichtet und ein Pigment-Wasser-Gemisch hergestellt und granuliert. Die Verwendung von Wasser hat gegenüber den im Stand der Technik verwendeten Hilfsmitteln den Vorteil, dass es im Prozess wieder ausgetrieben werden kann. Die physikalischen Eigenschaften der Granalien, wie Transport- und Lagerfähigkeit werden durch die Hüllenbeschaffenheit bewirkt und sind deshalb reproduzierbar und beständig. Vorteilhaft ist bei der Herstellung der Granalien die Möglichkeit des Trennens von Nutz- und Rückführkörnung.

Es ist auch möglich, nach dem erfindungsgemäßen Verfahren bindemittelfreie Granalien herzustellen und diese mit einer Schmelze durch Aufsprühen zu umhüllen. Das Umhüllungsmaterial muß eine Schmelztemperatur > 60°C besitzen und kann z.B. aus Wachs bestehen. Vorteilhaft ist dabei, die Erhärtung der Hülle durch Abkühlung mit einem Luftstrom regelbarer Temperatur zu bewirken.

Das erfindungsgemäße Granulat besitzt zum Zeitpunkt des Transports eine feste Hülle annähernd gleicher Beschaffenheit und Dicke. Durch Klassifizierung der Korngröße und Erzeugung einer Umhüllung gegebenenfalls mit Trocknung des Granulates kann das Stampfgewicht, die verbleibende Feuchtigkeit, die Hüllendicke und die Korngröße eingestellt und damit optimal an die jeweils gewünschten Bedingungen angepasst werden. Das erfindungsgemäße Granulat zeichnet sich durch eine gute Baustoffverträglichkeit aus.

Durch die Anordnung einer Hülle um die Granalienkerne liegt nach Zugabe des Granulates und Zerstörung der Hülle das Farbpigment im Baustoff ohne feste Bindung vor, so dass das Desagglomerieren der Granalien mit sehr hoher Geschwindigkeit erfolgt, da die Granalien auf Grund des Verzichtes auf Bindemittel im Granalienkern dort nur sehr geringe Bindekräfte aufweisen. Das gute Auflösungsvermögen der umhüllten Granalien erlaubt den Einsatz von Granalien mit größeren Korndurchmessern. Weiterhin sind der geringe Fremdstoffanteil in den Farbpigmenten der umhüllten Granalien sowie die universelle Einsetzbarkeit des erfindungsgemäßen Verfahrens zur Herstellung der Umhüllung für alle bisher bekannten Verfahren der Granulierung wie zum Beispiel Preßgranulierung, Wirbelschichtgranulierung, Sprühgranulierung oder Aufbaugranulierung vorteilhaft.

Die Erfindung wird im Folgenden anhand eines Ausfühlungsbeispiels näher erläutert.

Dazu zeigt:

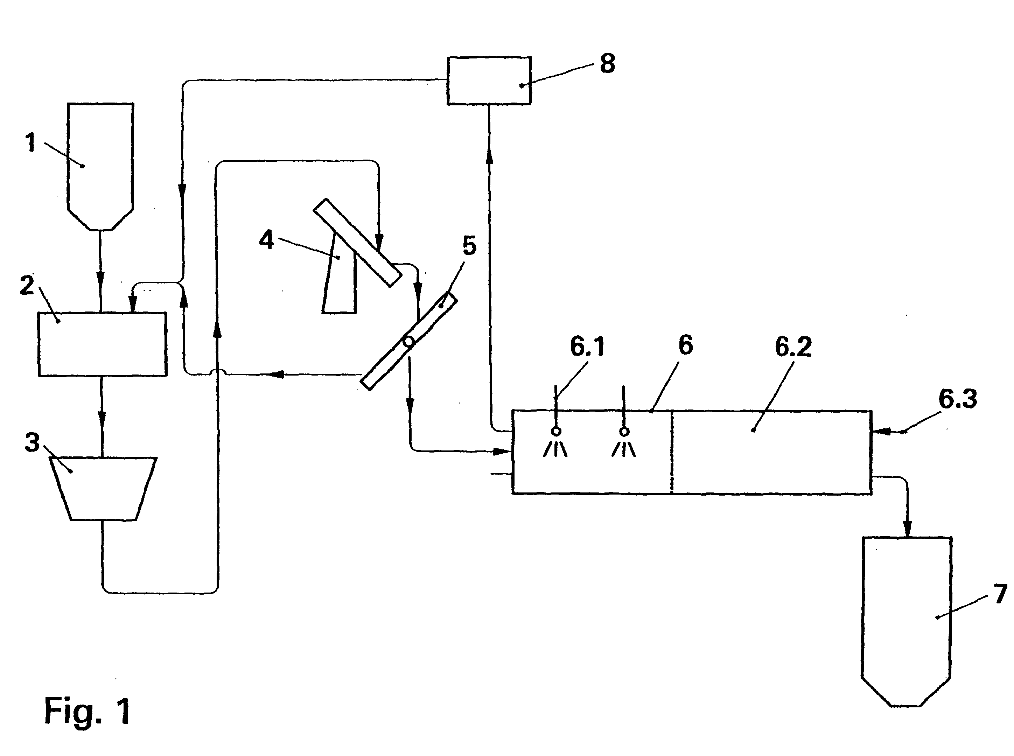

- Figur 1: eine schematisierte Darstellung des Verfahrensablaufs zur Herstellung umhüllter Granalien.

Wie aus Figur 1 ersichtlich ist, werden einem Farbpigmentbunker 1 pulverförmige Farbpigmente mittels einer Dosiervorrichtung entnommen und einem Zwangsmischer 2 zugeführt. In diesem Zwangsmischer 2 wird zur Bildung von Granalien Wasser in einem Anteil zwischen 10% und 30% zugesetzt. Der Austrag des Mischers 2 wird einem Vorgranulator 3 zugeführt, welcher ein Vorgranulat der gewünschten Korngröße herstellt. Dieses Vorgranulat wird einem Pelletierteller 4 zugeführt und verdichtet. Durch eine modifizierbare Tellereinstellung wird überwiegend eine Nutzkorngröße von 0,5 bis 1,5 mm hergestellt. Der Austrag des Tellers 4 wird einem Schwingsieb 5 zugeführt, auf dem Überkorn mit einer Korngröße von mehr als 1,5 mm abgetrennt wird. Die durch das Schwingsieb 5 abgetrennte Nutzkornfraktion von 0,5 bis 1,5 mm wird einer kontinuierlich arbeitenden Trommel 6 zugegeben, in der mittels Sprühdüsen 6.1 Polyvinylalkohol in wässriger Suspension als zunächst flüssiges Umhüllungsmaterial aufgesprüht wird. Der Trommel 6 wird im Bereich einer Trocknungszone 6.2 kontinuierlich Trockenluft 6.3 zugeführt, wodurch der Wassergehalt der besprühten Granalien auf einen Wert von weniger als 0,5% reduziert und die Verfestigung des Umhüllungsmaterials realisiert werden. Durch die Trockenluft 6.3 werden Feingutanteile des Farbpigmentstoffes in der Trommel 6 aufgenommen, in einer Entstaubungsanlage 8 abgeschieden und dem Mischer 2 zugeführt. Der Austrag der Trommel 6 wird als umhülltes Farbgranulat dem Fertiggutsilo 7 zugeführt und dort gespeichert.

### BEZUGSZEICHENLISTE

- 1: Farbpigmentbunker
- 2: Mischer
- 3: Vorgranulator
- 4: Pelletierteller
- 5: Schwingsieb
- 6: Trommel
6.1 Sprühdüsen
6.2 Trocknungszone
6.3 Trockenluft
- 7: Fertiggutsilo
- 8: Entstaubung

## Patentansprüche

1. Farbpigmentgranalien für das Einfärben von Baustoffen, insbesondere zum Einfärben von Beton, **dadurch gekennzeichnet, dass** die Granalien aus bindemittelfreien Granalienkernen der Korngröße 0,1 bis 8 mm bestehen, die mit einer Umhüllungsschicht aus einem zerstörbaren Material umgeben sind und dass die Granalien einen Feuchtegehalt < 30 % aufweisen.

2. Farbpigmentgranalien zum Einfärben von Beton nach Anspruch 1, **dadurch gekennzeichnet, dass** die Umhüllungsschicht aus organischen Stoffen oder aus einem Gemisch aus anorganischen und organischen Stoffen besteht.

3. Farbpigmentgranalien nach Anspruch 1 oder 2, **dadurch gekennzeichnet, dass** die Granalien eine Korngröße 0,5 bis 1,5 mm und einen Feuchtegehalt < 5 % aufweisen

4. Verfahren zur Herstellung von Farbpigmentgranalien, insbesondere zur Herstellung von Granalien nach einem der vorgenannten Ansprüche, **dadurch gekennzeichnet, dass** in einem Vorgranulator (3) bindemittelfreie Granalien hergestellt, diese unmittelbar nach der Granulierung verdichtet, anschließend einer Klassierung zugeführt werden und schließlich die durch die Klassierung ausgesonderte Nutzkornfraktion mit einem Umhüllungsmaterial umhüllt wird.

5. Verfahren nach Anspruch 4, **dadurch gekennzeichnet, dass** das Umhüllungsmaterial in gelöster Form mittels Sprühdüsen (6.1) auf die Granalien aufgebracht wird und die Verfestigung der Umhüllung durch die Zuführung von Trockenluft (6.3) erfolgt.

6. Verfahren nach Anspruch 4, **dadurch gekennzeichnet, dass** die Umhüllung aus einem geschmolzenen Material mit einer Schmelztemperatur > 60 °C mittels Sprühdüsen auf die Granalien aufgebracht wird und die Verfestigung der Umhüllung durch Abkühlung erfolgt.

7. Verfahren nach einem der Ansprüche 4 bis 6, **dadurch gekennzeichnet, dass** in den Granalien enthaltenes Granulierwasser durch einen Trocknungsprozess weitgehend ausgetrieben wird.

## Claims

1. Colouring pigment granulated materials for the colouring of building material, especially for the colouring of concrete, **characterized in that** the granulated materials consist of binder-free granulate material cores of grain size 0.1 through 8 mm which are surrounded by a coating layer made of a destructible material, and **in that** the granulated material presents a moisture content of < 30 %.

2. Colouring pigment granulated materials for the colouring of concrete as claimed in claim 1, **characterized in that** the coating layer consists of organic matter, or of a mixture of inorganic and organic matter.

3. Colouring pigment granulated materials as claimed in claim 1 or 2, **characterized in that** the granulated materials present a grain size of 0.5 through 1.5 mm and a moisture content of < 5 %.

4. Process to produce colouring pigment granulated materials, especially to produce granulated materials according to any of the aforementioned claims, **characterized in that** a primary granulator (3) produces binder-free granulated materials, that these are compacted immediately after granulation, subsequently fed to a classification, and finally the useful grain size fraction segregated by classification is coated with a coating material.

5. Process as claimed in claim 4, **characterized in that** the coating material is applied to the granulated materials in a dissolved form using spray nozzles (6.1), and **in that** the solidification of the coating is obtained by feeding in dry air (6.3).

6. Process as claimed in claim 4, **characterized in that** the coating made of a molten material is applied to the granulated materials at a fusion temperature of > 60 °C using spray nozzles, and **in that** the solidification of the coating is obtained by cooling.

7. Process as claimed in any claim 4 through 6, **characterized in that** the granulation water contained in the granulated materials is largely expelled by a drying process.

## Revendications

1. Grenailles de pigments colorants pour la coloration de composants de construction, notamment pour la coloration du béton, **caractérisées en ce que** les grenailles consistent en noyaux de grenailles exempts de liants, de grosseur de grain comprise entre 0,1 et 8 mm, enveloppés d'une couche d'enrobage en matériau destructible, et **en ce que** les grenailles présentent une teneur en humidité inférieure à 30 %.

2. Grenailles de pigments colorants pour la coloration du béton selon revendication 1, **caractérisées en ce que** la couche d'enrobage consiste en substances organiques, ou en un composé de substances organiques et inorganiques.

3. Grenailles de pigments colorants selon revendication 1 ou 2, **caractérisées en ce que** les grenailles présentent une grosseur de grain comprise entre 0,5 et 1,5 mm et une teneur en humidité inférieure à 5 %.

4. Procédé de fabrication de grenailles de pigments colorants, notamment selon l'une des revendications précédentes, **caractérisé en ce que** des grenailles exemptes de liants sont produites dans un prégranulateur (3) et compactées immédiatement après granulation, avant d'être dirigées vers un tri et que la fraction de grain utile séparée par le tri soit finalement enveloppée d'un matériau d'enrobage.

5. Procédé selon revendication 4, **caractérisé en ce que** le matériau d'enrobage est appliqué sous forme dissoute sur les grenailles au moyen de pulvérisateurs (6.1) et **en ce que** l'enrobage est fixé par amenée d'air sec (6.3).

6. Procédé selon revendication 4, **caractérisé en ce que** l'enrobage est appliqué par des pulvérisateurs sur les grenailles, à partir d'un matériau fondu à une température de fusion supérieure à 60 °C , et **en ce que** l'enrobage est fixé par refroidissement.

7. Procédé selon l'une des revendications 4 à 6, **caractérisé en ce que** l'eau de granulation contenue dans les grenailles est presque totalement expulsée par processus de séchage.
